# EUROPÄISCHE PATENTSCHRIFT

(11) **EP 0 554 531 B1**
(45) Veröffentlichungstag und Bekanntmachung des Hinweises auf die Patenterteilung: **27.09.1995**
(21) Anmeldenummer: 92119417.1
(22) Anmeldetag: 13.11.1992
(51) Int. Cl.: B60C 27/14

(54) **Gleitschutz für Fahrzeugräder**
Traction device for car wheels
Dispositif anti-dérapant pour roues de véhicules

(30) Priorität: 07.02.1992 DE 4203612
(43) Veröffentlichungstag der Anmeldung: 11.08.1993
(73) Patentinhaber: Confon AG, CH-9424 Rheineck (CH)
(72) Erfinder: Preusker, Werner, W-7793 Sauldorf (DE)
(74) Vertreter: COHAUSZ HASE DAWIDOWICZ & PARTNER

(56) Entgegenhaltungen:
- EP-A- 0 147 272
- EP-A- 0 263 433
- DE-U- 8 713 613
- FR-A- 2 373 407

## Beschreibung

Die Erfindung betrifft einen Gleitschutz für Fahrzeugräder mit einer an einer Seite der Radfelge oder der Radscheibe koaxial befestigten Haltevorrichtung, die durch über die Radlauffläche greifende quer zur Laufrichtung liegende Arme ein auf der Radlauffläche aufliegendes Gleitschutzmittel hält, wobei die Arme an der Haltevorrichtung verschwenkbar durch Gelenke befestigt sind, deren Gelenkachsen rechtwinklig zur Radachse und zu dem durch das Gelenk verlaufenden Radradius sind. Ein Gleitschutz gemäß dem Oberbegriff des Anspruchs 1 ist aus FR-A-2 373 407 bekannt.

Es ist bekannt, an der seitlichen Haltevorrichtung eines Gleitschutzes radiale Vorsprünge anzuformen, die eine Gelenkachse aufweisen, an der jeweils ein Arm angelenkt ist, der über die Lauffläche des Kraftfahrzeugrades greift und ein Gleitschutzmittel hält. Bei diesen bekannten Gleitschutzvorrichtungen hat es sich gezeigt, daß eine Bewegung der Arme im Bereich des Gelenks um eine zur Radachse parallele Achse erforderlich ist, wobei nach einem solchen begrenzten Verschwenken des Armes um diese Achse ein Rückstellen selbsttätig erforderlich ist.
Aufgabe der Erfindung ist es, einen Gleitschutz der eingangs genannten Art so zu verbessern, daß die Arme an der Haltevorrichtung zusätzlich um eine zur Radachse parallele Achse im Bereich des Gelenks zu beiden Seiten begrenzt beweglich und selbsttätig rückstellbar sind.

Diese Aufgabe wird erfindungsgemäß dadurch gelöst, daß durch das Gelenk die Arme zusätzlich um eine Achse verschwenkbar sind, die zur Radachse parallel ist, wobei die im Gelenk befestigten Armenden in einer Ausnehmung der Haltevorrichtung einliegen, die sich zur Radseite hin öffnet und geneigte Seitenflächen aufweist, die das Armende aus einer schrägen Stellung in eine radiale Stellung zurückstellen.

Hierdurch wird bei einfachster Konstruktion ein Verschwenken des Armes um eine zur Radachse parallelen Achse im Bereich des Gelenkes erreicht und ferner dafür gesorgt, daß nach einem solchen begrenzten Verschwenken aufgrund der schrägen Seitenflächen der Arm sich selbsttätig zurückstellt.

Besonders vorteilhaft ist es hierbei, wenn die Neigung der Seitenflächen derart ist, daß die Seitenflächen am Boden der Ausnehmung einander näher sind als weiter außen näher zur Radseite.

Vorzugsweise wird vorgeschlagen, daß das Armende hakenförmig umgebogen ist und die Gelenkachse umgreift. Hierdurch wird bei einfachster Konstruktion eine leichte Montage ermöglicht. Auch wird hierzu vorgeschlagen, daß das hakenförmige Armende in eine insbesondere rechtwinklige Öffnung der Haltevorrichtung einsteckbar ist, die auf der der Radachse abgewandten Seite von der Gelenkachse begrenzt ist.

Von besonderem Vorteil ist es, daß die Arme
- nach außen (von Reifenlauffläche) nur in begrenztem Maß geschwenkt werden können.
- In der Führung radial verschiebbar sind.
- in der Führung radial verschiebbar sind und gleichzeitig über die Schrägen verschwenkbar bleiben.
- Im gesamten Bereich der radialen Verschiebbarkeit verschwenkbar sind.
- Nach dem Zusammenklappen im Endbereich einrasten. (Dieser Punkt ist wichtig, damit die Arme nach dem Zusammenklappen arretiert sind.)

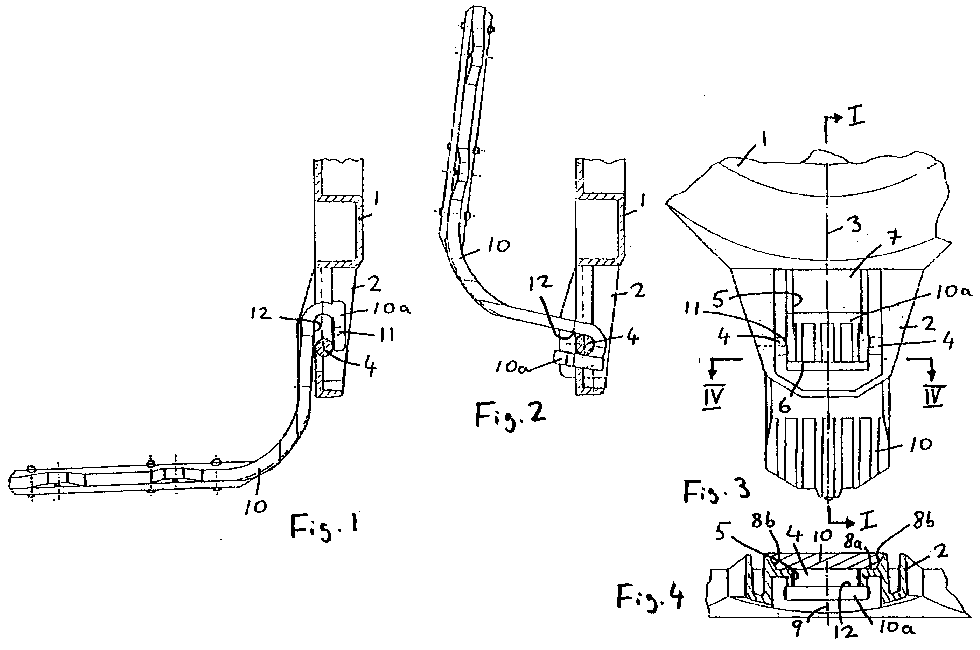

Ein Ausführungsbeispiel ist in der Zeichnung dargestellt und wird im folgenden näher beschrieben. Es zeigen
- Fig. 1: einen radialen Schnitt der Haltevorrichtung als Ausschnitt eines radialen Vorsprunges, an dem ein Arm angelenkt ist, der in der ausgeklappten Stellung steht,
- Fig. 2: einen Schnitt nach Fig. 1 mit einem Arm in eingeklappter Stellung,
- Fig. 3: eine Seitenansicht der Vorrichtung nach Fig. 1 von vorne
- Fig. 4: einen Schnitt nach IV-IV in Fig. 3.

Eine runde scheibenförmige Haltevorrichtung 1 wird drehbeweglich koaxial an der äußeren Seite eines Kraftfahrzeugrades befestigt und weist insbesondere vier radiale Vorsprünge 2 in gleichen Winkelabständen auf. Quer zum Radius 3 des Vorsprungs 2 ist eine Gelenkachse 4 im Vorsprung 2 befestigt, die eine rechtwinklige Öffnung 5 im Vorsprung 2 durchquert und damit die Öffnung 5 in eine äußere Öffnung 6 und eine innere Öffnung 7 teilt.

Auf der Gelenkachse 4 ist das hakenförmige Ende 10a eines Armes 10 gelagert, dessen freies Ende die Lauffläche des Kraftfahrzeugrades umgreift und dort ein Gleitschutzmittel hält.

Das hakenförmige Ende des Armes wird in die innere Öffnung 7 diagonal bzw. schräg eingeschoben und dann auf die Achse 4 geführt. Das innere Ende des Armes 10 liegt in einer Ausnehmung 8 ein, die sich zur Reifenseitenfläche hin öffnet und einen Boden 8a und schräge Seitenflächen 8b besitzt. Die Seitenflächen 8b erweitern die Ausnehmung 8 mit größer werdendem Abstand zum Boden 8a bzw. mit kleiner werdendem Abstand zur Reifenseitenfläche. Durch diese Form der Ausnehmung 8 wird bei einem begrenzten Verschwenken des Armes um die zur Radachse parallele Achse 9 der Arm 10 aus der Ausnehmung 8 herausgehoben, da die dem Vorsprung 2 zugewandte Seite des Armes entsprechend der Ausnehmung 8 geformt bzw. seitlich abgeschrägt ist und somit in der Ausnehmung 8 formschlüssig einliegt. Wird also der Arm 10 um die Achse 9 verschwenkt, so hebt er sich aus der Ausnehmung 8 zum Teil heraus. Da aber das der Radachse näher liegende Ende des Armes noch zum Teil in der Ausnehmung 8 einliegen bleibt, entsteht aufgrund der schrägen Seitenflächen 8b ein Rückstelleffekt, so daß nach dem Verschwenken des Armes zu einer der Seiten hin ein Rückverschwenken wieder erfolgt.

Während ein Herausverschwenken der Arme aus der Ausnehmung 8 durch das Gleitschutzmittel in der Regel erfolgt, geschieht das Zurückverschwenken aufgrund der Seitenflächen 8b. Damit ist eine zusätzliche Beweglichkeit der das Gleitschutzmittel haltenden Arme gegeben.

Das Gelenk 4 weist einen Anschlag, insbesondere in Form eines Vorsprungs auf, der ein Verschwenken des Armes von der Reifenlauffläche weg begrenzt.

Im nicht montierten Zustand des Gleitschutzes am Rad ist der Arm im nach innen eingeklappten Zustand im inneren Endbereich arretiert gehalten.

Der Arm 10 weist an seinem im Gelenk befestigten Ende einen länglichen Innenraum 12 auf, der von der Gelenkachse durchquert ist, so daß der Arm auf der Gelenkachse bei ständiger Verschwenkbarkeit radial verschieblich ist.

Das hakenförmige Ende 10a des Armes 10 weist auf den Rändern der Öffnung 5 zugewandten Seiten Vorsprünge insbesonder Noppen 11 auf, die im ein- und/oder ausgeklappten Zustand des Armes diesen in der jeweiligen Stellung lösbar arretieren.

## Patentansprüche

1. Gleitschutz für Fahrzeugräder mit einer an einer Seite der Radfelge oder der Radscheibe koaxial befestigten Haltevorrichtung (1), die durch über die Radlauffläche greifende quer zur Laufrichtung liegende Arme (10) ein auf der Radlauffläche aufliegendes Gleitschutzmittel hält, wobei die Arme (10) an der Haltevorrichtung (1) verschwenkbar durch Gelenke befestigt sind, deren Gelenkachsen (4) rechtwinklig zur Radachse und zu dem durch das Gelenk (4) verlaufenden Radradius (3) sind, **dadurch gekennzeichnet,** daß durch das Gelenk (4) die Arme (10) zusätzlich um eine Achse (9) verschwenkbar sind, die zur Radachse (3) parallel ist, wobei die im Gelenk (4) befestigten Armenden in einer Ausnehmung (8) der Haltevorrichtung (1) einliegen, die sich zur Radseite hin öffnet und geneigte Seitenflächen (8b) aufweist, die das Armende aus einer schrägen Stellung in eine radiale Stellung zurückstellen.

2. Gleitschutz nach Anspruch 1, **dadurch gekennzeichnet,** daß die Neigung der Seitenflächen (8b) derart ist, daß die Seitenflächen am Boden der Ausnehmung (8a) einander näher sind als weiter außen näher zur Radseite.

3. Gleitschutz nach einem der vorhergehenden Ansprüche,
**dadurch gekennzeichnet,** daß das Armende hakenförmig umgebogen ist und die Gelenkachse (4) umgreift.

4. Gleitschutz nach Anspruch 3,
**dadurch gekennzeichnet,** daß das hakenförmige Armende in eine insbesondere rechtwinklige Öffnung (7) der Haltevorrichtung einsteckbar ist, die auf der der Radachse abgewandten Seite von der Gelenkachse (4) begrenzt ist.

5. Gleitschutz nach einem der vorherigen Ansprüche,
**dadurch gekennzeichnet,** daß das Gelenk (4) einen Anschlag, insbesondere in Form eines Vorsprungs aufweist, der ein Verschwenken des Armes von der Reifenlauffläche weg begrenzt.

6. Gleitschutz nach einem der vorherigen Ansprüche,
**dadurch gekennzeichnet,** daß im nicht montierten Zustand des Gleitschutzes am Rad der Arm im nach innen eingeklappten Zustand im inneren Endbereich arretiert gehalten ist.

7. Gleitschutz nach einem der vorherigen Ansprüche,
**dadurch gekennzeichnet,** daß der Arm an seinem im Gelenk befestigten Ende einen länglichen Innenraum aufweist, der von der Gelenkachse durchquert ist, so daß der Arm auf der Gelenkachse bei ständiger Verschwenkbarkeit radial verschieblich ist.

8. Gleitschutz nach einem der vorherigen Ansprüche,
**dadurch gekennzeichnet,** daß das hakenförmige Ende (10a) des Armes (10) auf den den Rändern der Öffnung (5) zugewandten Seiten Vorsprünge, insbesondere Noppen (11) aufweist, die im ein- und/oder ausgeklappten Zustand des Armes diesen in der jeweiligen Stellung lösbar arretieren.

## Claims

1. A nonskid device for vehicle wheels, having a retaining device (1) which is coaxially attached to one side of the wheel rim or the wheel disc and retains a nonskid means bearing against the wheel housing surface via arms (10) extending transversely of the travelling direction and engaging over the wheel housing surface, the arms (10) being attached to the retaining device (1) pivotably via links whose pivots (4) are at right angles to the wheel axis and to the wheel radius (3) extending through the joint (4), characterized in that arms (10) can also be pivoted via the pivot (4) around an axis (9) which is parallel with the wheel axis (3), the ends of the arms attached to the pivot (4) being received in a recess (8) of the retaining device (1) which opens in the direction of the wheel side and has inclined lateral surfaces (8b) which restore the end of the arm from an inclined position to a radial position.

2. A nonskid device according to claim 1, characterized in that the inclination of the lateral surfaces (8b) is such that the lateral surfaces are closer to one another at the end of the recess (8a) than further outwards closer to the wheel side.

3. A nonskid device according to one of the preceding claims, characterized in that the end of the arm is bent in hook shape and engages around the joint pivot (4).

4. A nonskid device according to claim 3, characterized in that the hook-shaped end of the arm can be inserted into a more particularly rectangular opening (7) of the retaining device which is bounded by the joint pivot (4) on the side remote from the wheel axis.

5. A nonskid device according to one of the preceding claims, characterized in that the joint (4) has a stop, more particularly in the form of a projection which limits the pivoting of the arm away from the wheel housing surface.

6. A nonskid device according to one of the preceding claims, characterized in that when the nonskid device is not mounted on the wheel, the arm is retained locked in the inwardly hinged state in the inner end zone.

7. A nonskid device according to one of the preceding claims, characterized in that at its end attached to the pivot the arm has an elongate inner space through which the joint pivot extends, so that the arm can be radially displaced on the joint pivot while always remaining pivotable.

8. A nonskid device according to one of the preceding claims, characterized in that the hook-shaped end (10a) of the arm (10) has on the sides adjacent the edges of the opening (5) projections, more particularly knobs (11) which releasably lock the arm in its particular position in the inwardly and/or outwardly hinged state.

## Revendications

1. Dispositif antidérapant pour roues de véhicules, avec un dispositif de retenue fixé coaxialement sur un côté de la jante de roue ou du disque de roue qui porte, par des bras (10) disposés transversalement à la direction de marche, en prise au-delà de la surface de roulement de la roue, un moyen anti-dérapant en appui sur la surface de roulement de la roue, les bras (10) étant fixes à pivotement au dispositif de retenue (1) par des articulations dont les axes d'articulation (4) sont perpendiculaires à l'axe de roue et au rayon de roue (3) passant par l'articulation (4),
caractérisé en ce que les bras (10) sont additionnellement pivotants, par l'articulation (4), autour d'un axe (9) qui est parallèle à l'axe de roue (3), les extrémités de bras fixées dans l'articulation (4) étant logées dans un évidement (8) du dispositif de retenue (1) qui s'ouvre en direction du côté de la roue et présente des surfaces latérales inclinées (8b) qui ramènent les extrémités de bras d'une position oblique à une position radiale.

2. Dispositif antidérapant selon la revendication 1,
caractérisé en ce que l'inclinaison des surfaces latérales (8b) est telle que les surfaces latérales sont plus proches l'une de l'autre au fond de l'évidement (8a) que plus loin vers l'extérieur plus près du côté de la roue.

3. Dispositif antidérapant selon l'une des revendications précédentes,
caractérisé en ce que l'extrémité du bras est recourbée en forme de crochet et entoure l'axe d'articulation (4).

4. Dispositif antidérapant selon la revendication 3,
caractérisé en ce que l'extrémité du bras en forme de crochet peut être enfoncée dans une ouverture (7), en particulier orthogonale, du dispositif de retenue, qui est limitée par l'axe d'articulation (4) du côté écarté de l'axe de roue.

5. Dispositif antidérapant selon l'une des revendications précédentes,
caractérisé en ce que l'articulation (4) présente une butée, en particulier en forme de saillie, qui limite un pivotement du bras à l'écartement par rapport à la surface de roulement du pneumatique.

6. Dispositif antidérapant selon l'une des revendications précédentes,
caractérisé en ce que, à l'état non monté du moyen antidérapant sur la roue, le bras est maintenu arrêté à l'état escamoté dans la zone d'extrémité intérieure.

7. Dispositif antidérapant selon l'une des revendications précédentes,
caractérisé en ce que le bras présente, à son extrémité fixée dans l'articulation, un volume intérieur allongé qui est traversé par l'axe d'articulation, de telle sorte que le bras est coulissant radialement, avec une capacité de pivotement continuelle, sur l'axe d'articulation.

8. Dispositif antidérapant selon l'une des revendications précédentes,
caractérisé en ce que l'extrémité en forme de crochet (10a) du bras (10) présente, sur les côtés tournés vers les bords de l'ouverture (5), des saillies, en particulier des nopes (11), qui, à l'état escamoté et/ou déployé du bras, arrêtent celui-ci de manière démontable à l'état respectif.
